# EUROPEAN PATENT SPECIFICATION

(11) **EP 3 644 412 B1**
(45) Date of publication and mention of the grant of the patent: **01.03.2023**
(21) Application number: 18854898.6
(22) Date of filing: 27.08.2018
(51) Int. Cl.: H01M 4/134, H01M 4/133, H01M 4/36, H01M 4/62, H01M 4/1395, H01M 4/1393, H01M 10/0525

(54) **NEGATIVE ELECTRODE FOR LITHIUM SECONDARY BATTERY AND LITHIUM SECONDARY BATTERY COMPRISING SAME**
NEGATIVE ELEKTRODE FÜR LITHIUMSEKUNDÄRBATTERIE UND LITHIUMSEKUNDÄRBATTERIE DAMIT
ELECTRODE NEGATIVE POUR BATTERIE RECHARGEABLE AU LITHIUM ET BATTERIE RECHARGEABLE AU LITHIUM LA COMPRENANT

(30) Priority: 08.09.2017 KR 20170115099; 03.04.2018 KR 20180038717
(43) Date of publication of application: 29.04.2020
(73) Proprietor: LG Energy Solution, Ltd., Seoul 07335 (KR)
(72) Inventor: LEE, Joo Sung, Daejeon 34122 (KR); LEE, Hee Won, Daejeon 34122 (KR)
(74) Representative: Hoffmann Eitle
(86) International application number: PCT/KR2018/009882
(87) International publication number: WO 2019/050203

(56) References cited:
- JP-A- 2013 114 747
- KR-A- 20090 009 053
- KR-A- 20150 032 014
- KR-A- 20150 032 014
- KR-A- 20160 112 748
- KR-B1- 101 753 943
- KR-B1- 101 753 943
- US-A1- 2016 344 033
- KIM JONG MIN ET AL: "Extensively interconnected silicon nanoparticles via carbon network derived from ultrathin cellulose nanofibers as high performance lithium ion battery anodes", CARBON, ELSEVIER, OXFORD, GB, vol. 118, 15 March 2017 (2017-03-15), pages 8-17, XP085014141, ISSN: 0008-6223, DOI: 10.1016/J.CARBON.2017.03.028
- HAIPING SU ET AL: "Colloidal Synthesis of Silicon-Carbon Composite Material for Lithium-Ion Batteries", ANGEWANDTE CHEMIE, INTERNATIONAL EDITION, vol. 56, no. 36, 31 July 2017 (2017-07-31) , pages 10780-10785, XP055700880, DE ISSN: 1433-7851, DOI: 10.1002/anie.201705200

## Description

### [Technical Field]

### Cross-reference to Related Applications

This application claims priority from Korean Patent Application No. 10-2017-0115099, filed on September 08, 2017 and Korean Patent Application No. 10-2018-0038717, filed on April 03, 2018 in the Korean Intellectual Property Office.

### Technical Field

The present invention relates to a negative electrode for a high capacity lithium secondary battery and a lithium secondary battery including the same, and more specifically, to a negative electrode for a high capacity lithium secondary battery which includes a negative electrode active material layer using silicon nanoparticles and has improved stability, and a lithium secondary battery including the same.

### [Background Art]

There has been a dramatic increase in demand for batteries as energy sources with the technical development and increase in demand for mobile devices. In addition, as vehicles, such as a hybrid electric vehicle (HEV), a plug-in HEV (PHEV), and an electric vehicle have drawn attention as future vehicles, research has been variously conducted on batteries which are capable of meeting various requirements. In particular, research has been actively conducted on a lithium secondary battery having high energy density and also exhibiting excellent lifespan and cycle characteristics as a power source for such devices.

In this regard, a negative electrode of the conventional lithium secondary battery generally mostly utilizes a carbon-based compound capable of reversibly intercalating or deintercalating lithium ions while maintaining structural and electrical properties, as a negative electrode active material. On the other hand, in the negative electrode utilizing the carbon-based material, when lithium ions are intercalated and deintercalated, a chemical potential of the carbon-based compound may be similar to that of metallic lithium. Thus, lithium may be precipitated due to overpotential even at a slightly high charging current, and when lithium is precipitated once, the precipitation of lithium may be more rapidly accelerated as charging and discharging of a battery are repeated, thereby resulting in a decrease in capacity and causing a short circuit through a dendrite to greatly affect safety. In addition, due to overcharging of the battery, when an amount of lithium charged into the battery exceeds an amount of lithium that may be received by the negative electrode, the temperature rises and an exothermic reaction may occur to cause ignition, explosion, and the like of the battery.

In order to solve the above problems, recently, rather than the conventional carbon-based negative electrode materials, a great deal of research has been conducted on negative electrode materials and Li₄Ti₅O₁₂ obtained through a lithium alloy reaction using silicon (Si) and tin (Sn).

The use of silicon as a negative electrode material, which is one of the materials for replacing a carbonaceous negative electrode material, has a theoretical capacity that is about 10 times higher than that of the conventional carbon negative electrode material. As silicon stores lithium, a swelling phenomenon, in which the
silicon swells up, occurs, and a volume of the silicon may be sharply increased. Such a swelling phenomenon may cause structural stress on the negative electrode, which may result in damage to a battery. In particular, silicon is difficult to be applied as a negative electrode material of a lithium secondary battery in the form of a pouch, of which stability is greatly influenced as a volume thereof expands.

In this regard, Patent Application Publication No. 10-2016-0039982 discloses a composition for forming a negative electrode, which includes silicon oxide. Rather than inhibiting a swelling phenomenon in which silicon oxide swells up, when a conduction path is broken as a volume of the negative electrode expands, the composition for forming the negative electrode uses a binder having a high bonding force in order to compensate for the broken conduction path. However, since the silicon oxide is generally a micro-sized compound, there is a problem of safety in mass-producing a lithium secondary battery by applying a negative electrode material using the composition to the lithium secondary battery. In addition, silicon oxide provides a relatively lower theoretical capacity as compared with silicon, and even when the same mass is used, the capacity of a battery is low and thus efficiency of the battery is low.

KR 101 753 943 B1 describes a negative electrode comprising first and second negative electrode active materials each including a cellulosic compound.

KR 2015 0032014 A relates to a negative electrode comprising a negative electrode active material including silicon particles and carbon particles in different average particle diameters.

### [Prior Art Documents]

### [Patent Documents]

Korean Patent Laid-Open Publication No. 10-2016-0039982 (published on April 12, 2016)
KR 101 753 943 B1
KR 2015 0032014 A

### [Disclosure]

### [Technical Problem]

The present invention has been made to solve the above problems and is directed to providing a negative electrode for a lithium secondary battery, which is
capable of inhibiting a swelling phenomenon while realizing high capacity, and a lithium secondary battery including the same.

### [Technical Solution]

According to an embodiment, the present invention provides a negative electrode for a lithium secondary battery obtainable by the manufacturing method of the present invention as defined in claim 1,
the negative electrode including a negative electrode current collector, and a negative electrode active material layer disposed on the negative electrode current collector, wherein the negative electrode active material layer includes a graphite-based active material having an average particle diameter (D₅₀) of 5 µm to 50 µm, silicon nanoparticles having an average particle diameter (D₅₀) of 70 nm to 300 nm, a first conductive material, and two or more cellulose-based compounds, wherein each cellulose-based compound has a different weight average molecular weight and wherein the two or more cellulose-based compounds comprise a first cellulose-based compound having a weight average molecular weight of 10,000 Da to 500,000 Da and a second cellulose-based compound having a weight average molecular weight of 1,000,000 Da to 2,500,000 Da.

According to another embodiment, the present invention provides a method of preparing a negative electrode for a lithium secondary battery, the method including forming a first mixture by mixing silicon nanoparticles having an average particle diameter (D₅₀) of 70 nm to 300 nm, a first conductive material, a first cellulose-based compound having a weight average molecular weight of 10,000 Da to 500,000 Da, and a solvent, forming a second mixture by mixing a graphite-based active material having an average particle diameter (D₅₀) of 5 µm to 50 µm, a second cellulose-based compound having a weight average molecular weight of 1,000,000 Da to 2,500,000 Da, and a solvent, forming a negative electrode active material slurry by mixing the first mixture and the second mixture, and forming a negative electrode active material layer by applying the negative electrode active material slurry on a negative electrode current collector.

According to another aspect, the present invention provides a lithium secondary battery including a negative electrode for a lithium secondary battery according to the present invention.

### [Advantageous Effects]

Since a negative electrode for a lithium secondary battery according to the present invention includes silicon nanoparticles and a graphite-based active material satisfying a specific particle diameter range inside a negative electrode active material layer and the silicon nanoparticles are disposed in air gaps between the graphite-based active materials, while high capacity silicon is used, a swelling phenomenon of silicon particles can be effectively inhibited.

In addition, since two or more types of cellulose-based compounds having different weight average molecular weights are used, both the silicon nanoparticles and the graphite-active material having different average particle diameters (D₅₀) can be uniformly dispersed inside the negative electrode active material layer.

### [Description of Drawing]

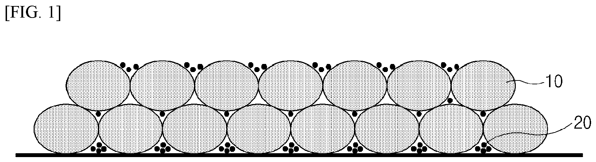

FIG. 1 is a cross-sectional view illustrating a negative electrode active material layer for a lithium secondary battery according to the present invention.

### [Best Mode of the Invention]

Hereinafter, the present invention will be described in more detail to allow for a clearer understanding of the present invention.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and
the technical idea of the invention, based on the principle that an inventor may properly define the meaning of the words or terms to best explain the invention.

In the present invention, an average particle diameter (D₅₀) may be measured using a laser diffraction method or a scanning electron microscope (SEM) image. The average particle diameter (D₅₀) may be defined as a particle diameter at 50% in cumulative particle diameter distribution based on a volume (cumulative volume amount).

### Negative Electrode

Hereinafter, a negative electrode for a lithium secondary battery according to the present invention will be described.

The negative electrode for a lithium secondary battery according to the present invention includes a negative electrode current collector and a negative electrode active material layer disposed on the negative electrode current collector. The negative electrode active material layer includes a graphite-based active material having an average particle diameter (D₅₀) of 5 µm to 50 µm, silicon nanoparticles having an average particle diameter (D₅₀) of 70 nm to 300 nm, a first conductive material, and two or more cellulose-based compounds, wherein each cellulose-based compound has a different weight average molecular weight and wherein the two or more cellulose-based compounds comprise a first cellulose-based compound having a weight average molecular weight of 10,000 Da to 500,000 Da and a second cellulose-based compound having a weight average molecular weight of 1,000,000 Da to 2,500,000 Da.

When the graphite-based active material, the silicon nanoparticles, the first conductive material, and the two types of cellulose-based compounds having different weight average molecular weights are included in the negative electrode active material layer, the negative electrode active material layer may be formed to have high capacity characteristics and improved lifespan characteristics by inhibiting the negative electrode active material layer from being swelled.

Generally, a silicon-based compound used as a negative electrode active material provides a higher theoretical capacity as compared with a carbon-based compound, but has a problem in that a swelling phenomenon occurs when lithium ions are intercalated. When the swelling phenomenon occurs, a total volume of the negative electrode including the negative electrode active material layer may be increased to thus generate cracks in the inside and a surface of the negative electrode. As a result, consumption of an electrolyte may be increased, and mechanical exfoliation may occur in the electrode, resulting in a decrease in lifespan characteristics of a battery.

According to the research of the present inventors, when silicon nanoparticles having an average particle diameter (D₅₀) within the above range were used as the silicon-based compound, it could be confirmed that a swelling phenomenon was significantly reduced as compared with when silicon particles having an average particle diameter (D₅₀) of 10 µm or more were used, and thus, it could be confirmed that the swelling phenomenon was prevented.

In addition, when a negative electrode active material layer was formed by mixing silicon nanoparticles having an average particle diameter (D₅₀) within the above range and a graphite-based active material having an average particle diameter (D₅₀) within the above range, the silicon nanoparticles having a small particle diameter were located in air gaps formed between the graphite-based active materials, and thus, it could be confirmed that the entire negative electrode active material layer was effectively inhibited from swelling even when the silicon nanoparticles partially swell.

In the present invention, the negative electrode current collector may include any material without particular limitation as long as the material has high conductivity without causing a chemical change in a battery. Specifically, the negative electrode current collector may include copper, stainless steel, aluminum, nickel, titanium, calcined carbon, copper or stainless steel that is surface-treated with carbon, nickel, titanium, silver, or the like, an aluminum-cadmium alloy, or the like.

The negative electrode current collector may have any form such as a film, a sheet, a foil, a net, a porous body, a foam body, a nonwoven fabric body, or the like.

In addition, the negative electrode current collector may have a thickness of 3 µm to 500 µm or 4 µm to 400 µm, more preferably, 5 µm to 300 µm. The thickness of the negative electrode collector is not necessarily limited to the above range and may be changed according to the total capacity or the like of a negative electrode for a lithium secondary battery.

Meanwhile, fine irregularities or patterns may be formed on a surface of the negative electrode current collector so as to strengthen a bonding force between the negative electrode current collector and the negative electrode active material layer.

In the present invention, the graphite-based active material included in the negative electrode active material layer may have an average particle diameter (D₅₀) of 5 µm to 50 µm, preferably, 10 µm to 40 µm, and more preferably, 15 µm to 30 µm.

When the graphite-based active material having the average particle diameter (D₅₀) within the above range is used, silicon nanoparticles may be located in air gaps formed between the graphite-based active materials. When the silicon nanoparticles are located in the air gaps formed between the graphite-based active materials, the graphite-based active material may prevent the silicon nanoparticles from swelling beyond a volume inside the air gaps.

FIG. 1 is a cross-sectional view illustrating a negative electrode active material layer in which silicon nanoparticles 20 are located in air gaps between graphite-based active materials 10. It can be confirmed that the silicon nanoparticles are located so as to not swell in the air gaps.

In the present invention, the silicon nanoparticles included in the negative electrode active material layer disposed on the negative electrode current collector may have an average particle diameter (D₅₀) of 70 nm to 300 nm, preferably, 80 nm to 300 nm, and more preferably, 90 nm to 300 nm.

When the silicon nanoparticles have an average particle diameter (D₅₀) less than the above range, a theoretical capacity of a battery may not be maintained at a certain level or more. When the silicon nanoparticles have an average particle diameter (D₅₀) exceeding the above range, the silicon nanoparticles may more rapidly swell and may not be located in the air gaps formed between the negative electrode active materials when lithium ions are intercalated into the negative electrode active material layer during charging and discharging. Therefore, the total volume of the negative electrode including the negative electrode active material layer may be increased to thus generate cracks in the inside and the surface of the negative electrode. As a result, consumption of an electrolyte may be increased, and mechanical exfoliation may occur in the electrode, resulting in a decrease in lifespan characteristics of a battery.

In the present invention, the silicon nanoparticles included in the negative electrode active material layer may be included in an amount of 1 to 100 parts by weight, preferably, 5 to 50 parts by weight, and more preferably, 10 to 30 parts by weight with respect to 100 parts by weight of the graphite-based active material.

When the amount of the silicon nanoparticles satisfies the above range, most of the silicon nanoparticles may be located in the air gaps formed between the graphite-based active materials, thereby effectively inhibiting the silicon nanoparticles from swelling during charging and discharging.

In the present invention, a first conductive material may be included in the active material layer of the negative electrode for a lithium secondary battery.

The first conductive material is used for imparting conductivity to the negative electrode. The first conductive material may include any material without particular limitation as long as the material does not cause a chemical change and has electronic conductivity. The first conductive material may be independently present in the negative electrode active material layer, but it may be present in a state of being attached to a surface of the silicon nanoparticles. When the first conductive material is attached to the surface of the silicon nanoparticles, an electrical path may be formed between active material particles to realize more excellent conductivity.

Specifically, the first conductive material may include, for example, at least one compound selected from the group consisting of carbon nanoparticles, carbon nanofibers, carbon nanotubes, and carbon nanorods.

Meanwhile, the first conductive material may have a nano size. In this case, the first conductive material may be smoothly attached to the surface of the silicon nanoparticles.

For example, when the first conductive material is in the form of particles such as carbon nanoparticles, an average particle diameter (D₅₀) of the first conductive material may be less than an average particle diameter (D₅₀) of the silicon nanoparticles. For example, the first conductive material may have an average particle diameter (D₅₀) of 5 nm to 40 nm, preferably, 10 nm to 35 nm, and more preferably, 15 nm to 30 nm. Meanwhile, the form of the particles is not limited to a specific form and refers to a form in which carbon and the like are aggregated or assembled. More specifically, the form of the particles may have a spherical form, a spherical-like form, a plate form, or the like. However, the present invention is not limited to the above-described forms and the form of the particles may include all forms of aggregated particles.

Meanwhile, when the first conductive material is in the form of a fiber such as carbon nanofibers, carbon nanotubes, or carbon nanorods, a width of the fiber may be less than an average particle diameter (D₅₀) of the silicon nanoparticles. For example, the first conductive material may have a width of 5 nm to 40 nm, preferably, 10 nm to 35 nm, and more preferably, 15 nm to 30 nm.

When the conductive material is in the form of a fiber and a monomer of the form of the fiber is a cylindrical form, the width may be defined as a diameter of a cross section of the cylindrical conductive material.

The first conductive material included in the negative electrode active material layer may be included in an amount of 0.01 to 2.0 parts by weight, preferably, 0.05 to 1.0 part by weight, and more preferably, 0.1 to 0.8 part by weight with respect to 100 parts by weight of the graphite-based active material.

In the present invention, the negative electrode active material layer includes the two or more types of the cellulose-based compounds having different weight average molecular weights. The cellulose-based compounds include a first cellulose-based compound and a second cellulose-based compound having a weight average molecular weight greater than that of the first cellulose-based compound.

More specifically, the first cellulose-based compound has a weight average molecular weight of 10,000 Da to 500,000 Da, preferably, 15,000 Da to 500,000 Da, more preferably, 20,000 Da to 500,000 Da, and still more preferably, 20,000 Da to 400,000 Da.

In addition, the second cellulose-based compound has a weight average molecular weight of 1,000,000 Da to 2,500,000 Da, preferably, 1,100,000 Da to 25,000,000 Da, more preferably, 1,200,000 Da to 20,000,000 Da, and still more preferably, 1,500,000 Da to 20,000,000 Da.

Here, the weight average molecular weight (Mw) means a polystyrene reduced weight average molecular weight (Mw) measured by gel permeation chromatography (GPC). The cellulose-based compound is for uniformly dispersing components such as a negative electrode active material, a conductive material, and the like included in the negative electrode active material layer. When the cellulose-based compound is mixed with other components constituting the negative electrode active material layer, the cellulose-based compound is present in the form of a negatively charged ion. As a result, an electrostatic repulsive force may be generated between the cellulose-based compounds, and thus, respective components may be uniformly dispersed in the negative electrode active material layer. However, the cellulose-based compounds have different chain lengths according to a weight average molecular weight thereof, and miscibility between the cellulose-based compound and the silicon nanoparticles may differ from miscibility between the cellulose-based compound and the graphite-based active material according to the chain lengths. Therefore, when only one type of the cellulose-based compound is used in the negative electrode according to the present invention, it is difficult to uniformly disperse both the silicon nanoparticles and the graphite-based active material.

Specifically, when the silicon nanoparticles having a relatively small average particle diameter (D₅₀) are mixed with the cellulose-based compound having a long chain length, the cellulose-based compound and the silicon nanoparticles may not be uniformly mixed, and an aggregation phenomenon may occur between the cellulose-based compounds.

In addition, when the graphite-based active material having a relatively large average particle diameter (D₅₀) are mixed with the cellulose-based compound having a short chain length, the chain length of the cellulose-based compound may be less than the average particle diameter (D₅₀) of the graphite-based active material. Accordingly, since a weak electrostatic repulsive force is generated in the cellulose-based compound, it may be difficult to uniformly mix the graphite-based active material.

Therefore, in the present invention, by using the two or more types of the cellulose-based compounds having different weight average molecular weights, excellent dispersibility may be realized with respect to both the silicon nanoparticles and the graphite-based active material.

The first cellulose-based compound may be included in an amount of 0.01 to 1 part by weight, preferably, 0.05 to 0.5 part by weight, and more preferably, 0.1 to 0.3 part by weight with respect to 100 parts by weight of the graphite-based active material.

The second cellulose-based compound may be included in an amount of 0.1to 5.0 parts by weight, preferably, 0.1 to 3.0 parts by weight, and more preferably, 0.5 to 3.0 parts by weight with respect to 100 parts by weight of the graphite-based active material.

Meanwhile, in the present invention, the negative electrode active material layer may further include a binder as needed.

The binder may include any material without particular limitation as long as the material is used for bonding inside the negative electrode active material layer and for strengthening a bonding force between the negative electrode active material layer and the negative electrode current collector. Specific examples of the binder may include polyvinylidene fluoride (PVDF), polyvinyl alcohol, starch, polyvinyl pyrrolidone, tetrafluoroethylene, polyethylene, polypropylene, an ethylenepropylene-diene monomer (EPDM), a sulfonated-EPDM, styrene-butadiene rubber (SBR), an acrylic-based copolymer, fluorine-based rubber, or various copolymers thereof, and any one thereof or a mixture of two or more thereof may be used. The binder may be included in an amount of 0.1 to 5 parts by weight, preferably, 0.1 to 4 parts by weight, and more preferably, 0.2 to 4 parts by weight with respect to 100 parts by weight of the graphite-based active material.

In the present invention, the negative electrode active material layer may further include a second conductive material as needed. The second conductive material is used for imparting conductivity to the negative electrode like the first conductive material. In a lithium secondary battery manufactured according to the present invention, the second conductive material may include any material without particular limitation as long as the material does not cause a chemical change and has electronic conductivity. However, the second conductive material may be located inside the negative electrode active material layer without being attached to a surface of the graphite-based active material or any compound constituting the negative electrode active material layer.

For example, the second conductive material may include a carbon-based material such as super C65, carbon black, acetylene black, Ketjen black, channel black, furnace black, lamp black, thermal black, or a carbon fiber; a metal powder or metal fiber of copper, nickel, aluminum, silver, or the like; an acicular or dendritic conductive whisker such as a zinc oxide whisker, a calcium carbonate whisker, a titanium dioxide whisker, a silicon oxide whisker, a silicon carbide whisker, an aluminum borate whisker, a magnesium borate whisker, a potassium titanate whisker, a silicon nitride whisker, a silicon carbide whisker, or an alumina whisker; a conductive metal oxide such as titanium oxide; a conductive polymer such as a polyphenylene derivative; or the like, and any one thereof or a mixture of two or more thereof may be used.

The second conductive material may be included in an amount of 0.1 to 5 parts by weight, preferably, 0.1 to 3 parts by weight, and more preferably, 0.5 to 3 parts by weight with respect to 100 parts by weight of the graphite-based active material.

Next, a method of forming a negative electrode for a lithium secondary battery according to the present invention will be described.

### Method of Forming Negative Electrode

A method of manufacturing a negative electrode for a lithium secondary battery according to the present invention includes (1) forming a first mixture, (2) forming a second mixture, (3) mixing the first mixture and the second mixture to form a negative electrode active material slurry, and (4) forming a negative electrode active material layer. Hereinafter, each operation will be described in detail.

### (1) Formation of First Mixture

First, the first mixture is formed by mixing silicon nanoparticles, a first conductive material, a first cellulose-based compound, and a solvent. Here, the details on the silicon nanoparticles, the first conductive material, and the first cellulose-based compound are the same as those described above.

That is, the silicon nanoparticles may be silicon nanoparticles having an average particle diameter (D₅₀) of 70 nm to 300 nm, preferably, 80 nm to 300 nm, and more preferably, 90 nm to 300 nm.

In addition, the first cellulose-based compound has a weight average molecular weight of 10,000 to 500,000, preferably, 15,000 to 500,000, more preferably, 20,000 to 500,000, and still more preferably, 20,000 to 400,000.

The solvent may be a solvent generally used in the art and may include dimethyl sulfoxide (DMSO), isopropyl alcohol, N-methylpyrrolidone (NMP), acetone, water, or the like, and any one thereof or a mixture of two or more thereof may be used. The solvent may be included in an amount allowing suitable viscosity in consideration of the applicability and processability of the negative electrode active material slurry.

The first mixture may include the silicon nanoparticles, the first conductive material, and the first cellulose-based compound in a weight ratio of (1 to 100):(0.01 to 2.0):(0.01 to 2.0), preferably, (10 to 100):(0.01 to 1.5):(0.01 to 1.5), and more preferably, (97 to 99):(0.5 to 1.5):(0.5 to 1.5). When the silicon nanoparticles, the first conductive material, and the first cellulose-based compound are included in the above weight ratio, the silicon nanoparticles may be uniformly dispersed in the first mixture.

### (2) Formation of Second Mixture

Next, the second mixture is formed by mixing a graphite-based active material, a second cellulose-based compound, and a solvent. In this case, the forming of the second mixture is not necessarily performed after the forming of the first mixture and may be performed before the forming of the first mixture or may be performed simultaneously with the forming of the first mixture.

The details on the graphite-based active material and the second cellulose-based compound are the same as those described above. In addition, the solvent used in the forming of the second mixture is the same as the solvent used in the forming of the first mixture.

That is, the graphite-based active material may have an average particle diameter (D₅₀) of 5 µm to 50 µm, preferably, 10 µm to 40 µm, and more preferably, 15 µm to 30 µm.

The second cellulose-based compound has a weight average molecular weight of 1,000,000 to 2,500,000, preferably, 1,100,000 to 25,000,000, more preferably, 1,200,000 to 20,000,000, and still more preferably, 1,500,000 to 20,000,000.

The second mixture may further include a second conductive material. Here, the details on the second conductive material are the same as those described above.

The second mixture may include the graphite-based active material, the second cellulose-based compound, and the second conductive material in a weight ratio of (1 to 100):(0.1 to 5):(0.1 to 5), preferably, (1 to 100):(0.5to 3):(0.5 to 3), and more preferably, (94 to 99):(0.5 to 3):(0.5 to 3). When the graphite-based active material, the second cellulose-based compound, and the second conductive material are mixed in the above weight ratio, the graphite-based active material may be uniformly dispersed in the second mixture.

### (3) Formation of Negative Electrode Active Material Slurry

Next, the negative electrode active material slurry is formed by mixing the first mixture and the second mixture.

The first mixture and the second mixture are prepared separately and then are finally mixed. When the silicon nanoparticles and the graphite-based active material are mixed simultaneously, an aggregation phenomenon may occur between the silicon nanoparticles or between the graphite-based active materials. Furthermore, the silicon nanoparticles may not be located in air gaps between the graphite-based active materials.

Therefore, the first mixture is formed by mixing the first cellulose-based compound having a short chain length such that the silicon nanoparticles are uniformly dispersed, and the second mixture is formed separately by mixing the second cellulose compound having a long chain length such that the graphite-based active material is uniformly dispersed.

Thereafter, when the first mixture and the second mixture are mixed, components constituting the negative electrode active material slurry may be uniformly dispersed, and the silicon nanoparticles may be located in the air gaps between the graphite-based active materials.

The first mixture and the second mixture may be mixed in a weight ratio of (5 to 15):(85to 95), preferably, (7 to 13):(87 to 93), and more preferably, (9 to 11):(89 to 91). When the first mixture and the second mixture are mixed so as to satisfy the above range, it can be confirmed that a finally formed lithium secondary battery has excellent capacity characteristics and swelling inhibition performance.

When the first mixture and the second mixture are mixed, a solid content included in the first mixture may be the same as a solid content included in the second mixture. After the first mixture and the second mixture are mixed, the solvent is finally removed, and only the graphite-based active material, the first and second conductive materials, and the first and second cellulose-based compounds, which constitute solid contents, remain when the negative electrode is formed. In this case, the solid content included in the first mixture may be the same as the solid content included in the second mixture. When the solid content included in the first mixture is the same as the solid content included in the second mixture, components included in the negative electrode active material slurry prepared by mixing the first mixture and the second mixture may be mixed in a certain ratio.

A binder may be further added in an operation of forming the negative electrode active material slurry. The binder may be added for bonding inside the negative electrode active material layer and for strengthening a bonding force between the negative electrode active material layer and the negative electrode current collector, and the details on the binder are the same as those described above.

The binder may be added in an amount of 0.1 to 5 parts by weight, preferably, 0.1 to 4 parts by weight, more preferably, 0.2 to 4 parts by weight with respect to 100 parts by weight of the graphite-based active material.

### (4) Formation of Negative Electrode Active Material Layer

Next, the negative electrode active material layer is formed.

As described above, the negative electrode active material layer is formed by applying the negative electrode active material slurry as formed above on a negative electrode current collector. The application may be performed through a conventional slurry coating method known in the art. Examples of the slurry coating method may include bar coating, spin coating, roll coating, slot die coating, and spray coating methods, but the present invention is not limited thereto.

The negative electrode active material slurry is applied on the negative electrode collector and then dried and roll-pressed to form the negative electrode active material layer, thereby forming the negative electrode for a secondary battery.

### Lithium Secondary Battery

Hereinafter, a lithium secondary battery according to the present invention will be described.

The lithium secondary battery according to the present invention includes a negative electrode, a positive electrode, a separator interposed between the negative electrode and the positive electrode, and a non-aqueous electrolyte, wherein the negative electrode is the above-described negative electrode according to the present invention. Since the details on the negative electrode are the same as those described above, the remaining components will be described below.

The positive electrode includes a positive electrode current collector and a positive electrode active material layer formed on the positive electrode current collector and including a positive electrode active material.

The above-described positive electrode may be formed according to a conventional positive electrode manufacturing method known in the art. For example, a positive electrode active material slurry including a positive electrode active material, a conductive material, a binder, and a solvent may be applied on a positive electrode current collector and then dried and roll-pressed, thereby forming the positive electrode.

In this case, the positive electrode current collector may include any material without particular limitation as long as the material has conductivity without causing a chemical change in the battery. For example, the positive electrode current collector may include stainless steel, aluminum, nickel, titanium, calcined carbon, or aluminum or stainless steel that is surface-treated with carbon, nickel, titanium, silver, or the like, or the like.

The positive electrode current collector may have a thickness of 3 µm to 500 µm or 4 µm to 400 µm, more preferably, 5 µm to 300 µm. The thickness of the positive electrode current collector is not necessarily limited to the above range and may be changed according to the total capacity or the like of a positive electrode for a lithium secondary battery.

Fine irregularities may be formed in a surface of the positive electrode current collector to increase a bonding force of the positive electrode active material. For example, the positive electrode current collector may be used in various types such as a film, a sheet, a foil, a net, a porous body, a foam body, a nonwoven fabric body, and the like.

In addition, the positive electrode active material may include a compound (lithiated intercalation compound) capable of reversibly intercalating and deintercalating lithium. Specifically, the positive electrode active material may include at least one selected from composite metal oxides containing lithium and one of cobalt, manganese, nickel, and combined metals thereof. More specifically, a lithium metal compound represented by the following Formula 1 may be used.

[Formula 1] LiₓM_{y}M'_{z}O₂

In Formula 1, M and M' each are an independent element selected from the group consisting of Fe, Ni, Co, Mn, Cr, Zr, Nb, Cu, V, Mo, Ti, Zn, Al, Ga, Mg, B, and combinations thereof, and x, y, and z each are an independent atomic fraction of oxide composition elements, wherein 0<x≤1, 0<y≤1, 0<z≤1, and 0<x+y+z≤ 2.

Among these, in terms of improving the capacity characteristics and stability of a battery, the positive electrode active material may be selected from the group consisting of LiCoO₂, LiMnO₂, LiMn₂O₄, LiNiO₂, a lithium nickel manganese cobalt oxide (for example, Li(Ni_{0.6}Mn_{0.2}Co_{0.2})O₂, LiNi_{0.5}Mn_{0.3}Co_{0.2}O₂, LiNi_{0.8}Mn_{0.1}Co_{0.1}O₂, or the like), a lithium nickel cobalt aluminum oxide (for example, LiNi_{0.8}Co_{0.15}Al_{0.05}O₂ or the like), and mixtures thereof.

The positive electrode active material may be included in an amount of 69 wt% to 98 wt% with respect to the total weight of the positive electrode active material layer.

The conductive material is used for imparting conductivity to the positive electrode. The conductive material may include any material without particular limitation as long as the material does not cause a chemical change and has electronic conductivity in a battery. Specific examples of the conductive material may include graphite such as natural graphite or artificial graphite; a carbon-based material such as carbon black, acetylene black, Ketjen black, channel black, furnace black, lamp black, thermal black, or a carbon fiber; a metal powder or metal fiber of copper, nickel, aluminum, silver, or the like; an acicular or dendritic conductive whisker such as a zinc oxide whisker, a calcium carbonate whisker, a titanium dioxide whisker, a silicon oxide whisker, a silicon carbide whisker, an aluminum borate whisker, a magnesium borate whisker, a potassium titanate whisker, a silicon nitride whisker, a silicon carbide whisker, or an alumina whisker; a conductive metal oxide such as titanium oxide; a conductive polymer such as a polyphenylene derivative; or the like, and any one thereof or a mixture of two or more thereof may be used.

The conductive material may be included in an amount of 30 wt% or less or 1 wt% to 30 wt% with respect to the total weight of the positive electrode active material layer.

In addition, the binder serves to bond particles of the positive electrode active material and improve a bonding force between the positive electrode active material and the current collector. Specific examples of the binder may include PVDF, polyvinyl alcohol, carboxymethylcellulose (CMC), starch, hydroxypropylcellulose, regenerated cellulose, polyvinyl pyrrolidone, tetrafluoroethylene, polyethylene, polypropylene, an EPDM, a sulfonated-EPDM, styrene-butadiene rubber, fluorine-based rubber, or various copolymers thereof, and any one thereof or a mixture of two or more thereof may be used. The binder may be included in an amount of 30 wt% or less or 1 wt% to 30 wt% with respect to the total weight of the positive electrode active material layer.

Meanwhile, in the lithium secondary battery, the separator may include any material without particular limitation as long as the material is used as a separator in a conventional lithium secondary battery. In particular, the separator may include a material having low resistance to an ion transfer of an electrolyte and having an excellent electrolyte-impregnation ability. Specifically, the separator may include a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure having two or more layers thereof. In addition, the separator may include a typical porous nonwoven fabric, for example, a nonwoven fabric composed of a high melting point glass fiber or a polyethylene terephthalate fiber.

The electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in manufacturing the lithium secondary battery, but the present invention is not limited thereto.

Specifically, the electrolyte may include an organic solvent and a lithium salt.

The organic solvent may include any material without particular limitation as long as the material may function as a medium through which ions involved in an electrochemical reaction of the battery may move. Specifically, the organic solvent may include an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC).

Among the organic solvents, the organic solvent may preferably include the carbonate-based solvent and may more preferably include a mixture of a cyclic carbonate (for example, ethylene carbonate or propylene carbonate) having high ionic conductivity and a high dielectric constant, which may increase the charging and discharging performance of a battery, and a low-viscosity linear carbonate-based compound (for example, ethylmethyl carbonate, dimethyl carbonate, or diethyl carbonate).

The lithium salt may include any compound without particular limitation as long as the compound may supply lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used. The lithium salt may be included in a concentration of 0.6 mol% to 2 mol% in the electrolyte

In addition to the above-described electrolyte components, for the purpose of improving the lifespan characteristics of a battery, preventing a decrease in capacity of the battery, and improving the discharging capacity of the battery, the electrolyte may further include, for example, at least one additive such as pyridine, triethylphosphite, triethanolamine, a cyclic ether, ethylenediamine, n-glyme, hexaphosphoric triamide, a nitrobenzene derivative, sulfur, a quinone imine dye, N-substituted oxazolidinone, N,N-substituted imidazolidine, an ethylene glycol dialkyl ether, an ammonium salt, pyrrole, 2-methoxy ethanol, or aluminum trichloride. In this case, the additive may be included in an amount of 0.1 wt% to 5 wt % with respect to the total weight of the electrolyte.

The lithium secondary battery having the above-described configuration may be manufactured by forming an electrode assembly by disposing the separator between the positive electrode and the negative electrode, disposing the electrode assembly in a case, and then injecting the electrolyte into the case.

As described above, since the lithium secondary battery, which includes the negative electrode according to the present invention, stably exhibits an excellent discharging capacity, excellent output characteristics, and an excellent capacity retention ratio, the lithium secondary battery is suitable for portable devices, such as mobile phones, notebook computers, and digital cameras, and electric vehicles such as hybrid electric vehicles.

Thus, according to another embodiment of the present invention, a battery module including the lithium secondary battery as a unit cell and a battery pack including the battery module are provided.

The battery module or the battery pack may be used as a power source of any one of medium to large-sized devices, for example, a power tool; electric cars including an electric vehicle (EV), a hybrid electric vehicle (HEV), and a plug-in hybrid electric vehicle (PHEV); or a power storage system.

### [Modes of the Invention]

Hereinafter, embodiments of the present invention will be described in more detail with reference to the accompanying drawings so as to be easily realized by those skilled in the art. The present invention may, however, be embodied in different forms and should not be constructed as limited to the embodiments set forth herein.

### [Examples]

### Example 1

### <Preparation of Negative Electrode Active Material Slurry>

Silicon nanoparticles having an average particle diameter (D₅₀) of 110 nm, carbon nanotubes having a width of 20 nm, and CMC (SG-L02 manufactured by GL CHEM Co., Ltd and having a weight average molecular weight of 300,000) were mixed in a weight ratio of 98.0:1.0:1.0 in water as a solvent to prepare a first mixture (having a solid content of 45 wt%). Thereafter, artificial graphite (LC1 manufactured by Shanshan Tech Co., Ltd and having an average particle diameter (D₅₀) of 20 µm), a conductive material (Super C65), and CMC (DAICEL 2200 manufactured by Daicel Corporation and having a weight average molecular weight of 1,260,000) were mixed in a weight ratio of 98.0:0.8:1.2 in water as a solvent to prepare a second mixture (having a solid content of 45 wt%). The first mixture and the second mixture were mixed in a weight ratio of 10:90, and 2.5 parts by weight of a binder (BM-L301 manufactured by Zeon Company) was added with respect to the total weight, i.e., 100 parts by weight of the mixture of the first mixture and the second mixture to prepare a negative electrode active material slurry.

### <Formation of Negative Electrode>

The prepared negative electrode active material slurry was applied on a copper metal thin film as an 8µm negative electrode current collector and dried by setting a temperature of circulating air to 80 °C. Then, roll pressing was performed and drying was performed in a 60 °C vacuum oven for 24 hours to form a negative electrode.

### <Manufacture of Lithium Secondary Battery>

A positive electrode based on NCM523 (NE-X10S manufactured by L&F Material Co., Ltd), which corresponds to the formed negative electrode, was formed, and a ceramic coating separator (B 12 manufactured by LG Chem) with a thickness of 12 µm was disposed between the positive electrode and the negative electrode to manufacture a bicell and bicells were subjected to stacking to manufacture a stack & folding cell. The stack & folding cell was injected into an 88µm thick pouch, and an electrolyte was injected to complete a lithium secondary battery. The design capacity of the completed battery was 3200 mAh.

### Example 2

A negative electrode active material slurry, a negative electrode, and a lithium secondary battery were manufactured in the same manner as in Example 1, except that, when the negative electrode active material slurry was prepared, artificial graphite (LC1 manufactured by Shanshan Tech Co., Ltd), a conductive material (Super C65), and CMC (MAC800LC manufactured by Nippon Paper Industries Co., Ltd and having a weight average molecular weight of 1,880,000) were mixed in a weight ratio of 98.0:1.0:1.0 in water as a solvent to prepare a second mixture.

### Example 3

A negative electrode active material slurry, a negative electrode, and a lithium secondary battery were manufactured in the same manner as in Example 1, except that, when the negative electrode active material slurry was prepared, artificial graphite (LC1 manufactured by Shanshan Tech Co., Ltd), a conductive material (Super C65), and CMC (GB-S01 manufactured by GL CHEM Co., Ltd and having a weight average molecular weight of 1,450,000) were mixed in a weight ratio of 98.0:0.8:1.2 in water as a solvent to prepare a second mixture.

### Example 4

A negative electrode active material slurry, a negative electrode, and a lithium secondary battery were manufactured in the same manner as in Example 1, except that, when the negative electrode active material slurry was prepared, silicon nanoparticles having an average particle diameter (D₅₀) of 300 nm, carbon nanotubes having a width of 20 nm, and CMC (H1496A manufactured by Daiichi Company and having a weight average molecular weight of 500,000) were mixed in a weight ratio of 98.0:1.0:1.0 in water as a solvent to prepare a first mixture.

### Example 5

A negative electrode active material slurry, a negative electrode, and a lithium secondary battery were manufactured in the same manner as in Example 1, except that, when the negative electrode active material slurry was prepared, artificial graphite (LC1 manufactured by Shanshan Tech Co., Ltd), a conductive material (Super C65), and CMC (MAC300LC manufactured by Nippon Paper Industries Co., Ltd and having a weight average molecular weight of 1,100,000) were mixed in a weight ratio of 98.0:0.8:1.2 in water as a solvent to prepare a second mixture.

### [Comparative Examples]

### Comparative Example 1

A negative electrode active material slurry was prepared in the same manner as in Example 1, except that, in an operation of preparing a first mixture, CMC (DAICEL 2200 manufactured by Daicel Corporation and having a weight average molecular weight of 1,260,000) was used instead of CMC (SG-L02 manufactured by GL CHEM Co., Ltd and having a weight average molecular weight of 300,000) of Example 1, and then, a negative electrode and a lithium secondary battery were manufactured in the same manner as in Example 1.

### Comparative Example 2

A negative electrode active material slurry was prepared in the same manner as in Example 1, except that, in Example 1, silicon nanoparticles having an average particle diameter (D₅₀) of 10 µm were used instead of silicon nanoparticles having an average particle diameter (D₅₀) of 110 nm, and then, a negative electrode and a lithium secondary battery were manufactured in the same manner as in Example 1.

### Comparative Example 3

In Example 1, in an operation of preparing a first mixture, silicon nanoparticles having an average particle diameter (D₅₀) of 110 nm and carbon nanotubes having a width of 20 nm were mixed in a weight ratio of 99.0:1.0 in water as a solvent to prepare the first mixture (having a solid content of 45 wt%) without using CMC (SG-L02 manufactured by GL CHEM Co., Ltd and having a weight average molecular weight of 300,000). In an operation of preparing a second mixture, artificial graphite (LC1 manufactured by Shanshan Tech Co., Ltd and having an average particle diameter (D₅₀) of 20 µm) and a conductive material (Super C65) were mixed in a weight ratio of 99.0 : 1.0 in water as a solvent to prepare the second mixture (having a solid content of 45 wt%) without using CMC (DAICEL 2200 manufactured by Daicel Corporation and having a weight average molecular weight of 1,260,000). Otherwise, a negative electrode active material slurry was prepared in the same manner as in Example 1, and then, a negative electrode and a lithium secondary battery were manufactured in the same manner as in Example 1.

### Comparative Example 4

A negative electrode active material slurry was prepared in the same manner as in Example 1, except that, in Example 1, in an operation of preparing a second mixture, CMC (SG-L02 manufactured by GL CHEM Co., Ltd and having a weight average molecular weight of 300,000) was used instead of CMC (DAICEL 2200 manufactured by Daicel Corporation and having a weight average molecular weight of 1,260,000), and then, a negative electrode and a lithium secondary battery were manufactured in the same manner as in Example 1.

### [Experimental Example]

### Experimental Example: Evaluation of Charging/discharging Capacity and Thickness Change Ratio of Electrode

Batteries of Examples 1 to 5 and Comparative Examples 1 to 4 were charged and discharged at 1 C/1 C in a range of 3.0 V to 4.2 V. An initial capacity, a capacity after 50 cycles, and a thickness increase ratio of a battery after 50 cycles were evaluated, and results of the evaluation were shown in Table 1 below.

**[Table 1]**

| | Initial capacity (mAh) | Capacity (mAh) after 50 cycles | Thickness increase ratio (%) of battery after 50 cycles |
|---|---|---|---|
| Example 1 | 3,208 | 3,106 | 2.1 |
| Example 2 | 3,204 | 3,111 | 1.8 |
| Example 3 | 3,205 | 3,104 | 2.1 |
| Example 4 | 3,200 | 3,097 | 2.4 |
| Example 5 | 3,198 | 3,094 | 2.2 |
| Comparative Example 1 | 3,205 | 3,001 | 3.9 |
| Comparative Example 2 | 3,203 | 2,837 | 8.5 |
| Comparative Example 3 | Unmeasurable | Unmeasurable | Unmeasurable |
| Comparative Example 4 | Unmeasurable | Unmeasurable | Unmeasurable |

As shown in Table 1, in the case of Examples 1 to 5, it can be confirmed that a difference between the initial capacity and capacity after 50 cycles is significantly smaller and a thickness increase ratio after 50 cycles is also significantly lower, as compared with Comparative Examples 1 and 2.

In addition, when one type of cellulose compound is used as in Comparative Example 1, the cycle capacity of a battery is rapidly lowered and a thickness increase ratio of the battery is increased.

Furthermore, when silicon particles having an average particle diameter (D₅₀) exceeding a range of the present invention are used as in Comparative Example 2, it can be confirmed that lifespan characteristics of a battery are decreased and a thickness increase ratio of the battery is increased after 50 cycles.

On the other hand, in the case of Comparative Example 3, a slurry was prepared without using a cellulose-based compound. Since the negative electrode active material slurry according to Comparative Example 3 was rapidly precipitated, uniform electrode coating could not be performed. Thus, a battery could not be manufactured.

In the case of Comparative Example 4, a cellulose-based compound having a low molecular weight was used to prepare a second mixture. Since the negative electrode active material slurry according to Comparative Example 4 was also precipitated rapidly, uniform electrode coating could not be performed. Thus, a battery could not be manufactured.

### [Description of Drawings]

10: graphite-based active material
20: silicon nanoparticles

## Claims

1. A method of forming a negative electrode for a lithium secondary battery, the method comprising:
forming a first mixture by mixing silicon nanoparticles having an average particle diameter (D₅₀) of 70 nm to 300 nm, a first conductive material, a first cellulose-based compound having a weight average molecular weight of 10,000 Da to 500,000 Da, and a solvent;
forming a second mixture by mixing a graphite-based active material having an average particle diameter (D₅₀) of 5 µm to 50 µm, a second cellulose-based compound having a weight average molecular weight of 1,000,000 Da to 2,500,000 Da, and a solvent;
forming a negative electrode active material slurry by mixing the first mixture and the second mixture; and
forming a negative electrode active material layer by applying the negative electrode active material slurry on a negative electrode current collector, the average particle diameter (D50) being measured using a laser diffraction method or a scanning electrode microscope image and being defined as a particle diameter at 50% in cumulative particle diameter distribution based on a volume, the weight average molecular weight meaning a polystyrene reduced weight average molecular weight measured by gel permeation chromatography.

2. The method of claim 1, further comprising adding a binder into the negative electrode active material slurry.

3. The method of claim 1, wherein the first mixture comprises the silicon nanoparticles, the first conductive material, and the first cellulose-based compound in a weight ratio of (1 to 100):(0.01 to 2.0):(0.01 to 2.0).

4. The method of claim 1, wherein the second mixture further comprises a second conductive material.

5. The method of claim 4, wherein the second mixture comprises the graphite-based active material, the second cellulose-based compound, and the second conductive material in a weight ratio of (1 to 100):(0.1 to 5):(0.1 to 5).

6. A negative electrode for a lithium secondary battery obtainable by the method according to claim 1, the negative electrode comprising:
a negative electrode current collector; and
a negative electrode active material layer disposed on the negative electrode current collector,
wherein the negative electrode active material layer comprises:
a graphite-based active material having an average particle diameter (D₅₀) of 5 µm to 50 µm;
silicon nanoparticles having an average particle diameter (D₅₀) of 70 nm to 300 nm;
a first conductive material; and
two or more cellulose-based compounds, wherein each cellulose-based compound has a different weight average molecular weight and wherein the two or more cellulose-based compounds comprise a first cellulose-based compound having a weight average molecular weight of 10,000 Da to 500,000 Da and a second cellulose-based compound having a weight average molecular weight of 1,000,000 Da to 2,500,000 Da, the average particle diameter (D50) being measured using a laser diffraction method or a scanning electrode microscope image and being defined as a particle diameter at 50% in cumulative particle diameter distribution based on a volume, the weight average molecular weight meaning a polystyrene reduced weight average molecular weight measured by gel permeation chromatography.

7. The negative electrode of claim 6, wherein the negative electrode active material layer comprises 1 to 100 parts by weight of the silicon nanoparticles with respect to 100 parts by weight of the graphite-based active material.

8. The negative electrode of claim 6, wherein the first conductive material comprises at least one compound selected from the group consisting of carbon nanoparticles, carbon nanofibers, carbon nanotubes, and carbon nanorods.

9. The negative electrode of claim 6, wherein the first conductive material is in a form of particles and has an average particle diameter (D₅₀) of 5 nm to 40 nm.

10. The negative electrode of claim 6, wherein the first conductive material is in a form of a fiber and has a width of 5 nm to 40 nm.

11. The negative electrode of claim 6, wherein the negative electrode active material layer further comprises a second conductive material.

12. The negative electrode of claim 11, wherein the second conductive material comprises at least one compound selected from the group consisting of a carbon-based material, a conductive whisker, a conductive metal oxide, and a conductive polymer.

13. The negative electrode of claim 6, wherein the negative electrode active material layer further comprises a binder.

14. A lithium secondary battery comprising the negative electrode according to claim 6.

## Patentansprüche

1. Verfahren zur Herstellung einer negativen Elektrode für eine Lithiumsekundärbatterie, wobei das Verfahren folgendes umfasst:
Bilden einer ersten Mischung durch Mischen von Silizium-Nanoteilchen mit einem mittleren Teilchendurchmesser (D₅₀) von 70 nm bis 300 nm, einem ersten leitfähigen Material, einer ersten Verbindung auf Cellulosebasis mit einem gewichtsmittleren Molekulargewicht von 10.000 Da bis 500.000 Da, und einem Lösungsmittel;
Bilden einer zweiten Mischung durch Mischen eines Aktivmaterials auf Graphitbasis mit einem mittleren Teilchendurchmesser (D₅₀) von 5 µm bis 50 µm, einer zweiten Verbindung auf Cellulosebasis mit einem gewichtsmittleren Molekulargewicht von 1.000.000 Da bis 2.500.000 Da und einem Lösungsmittel;
Bilden einer Negativelektrodenaktivmaterialaufschlämmung durch Mischen der ersten Mischung und der zweiten Mischung; und
Bilden einer Negativelektrodenaktivmaterialschicht durch Aufbringen der Negativelektrodenaktivmaterialaufschlämmung auf einen Negativelektrodenstromabnehmer,
wobei der mittlere Teilchendurchmesser (D₅₀) gemessen wird unter Verwendung eines Laserbeugungsvefahrens oder einer Rasterelektrodenmikroskopaufnahme und definiert ist als ein Teilchendurchmesser bei 50% der kumulativen Teilchendurchmesserverteilung auf Volumenbasis, und das gewichtsmittlere Molekulargewicht ein Polystyrol-reduziertes gewichtsmittleres Molekulargewicht gemessen durch Gelpermeationschromatographie bedeutet.

2. Verfahren nach Anspruch 1, ferner umfassend die Zugabe eines Bindemittels zu der Negativelektrodenaktivmaterialaufschlämmung.

3. Verfahren nach Anspruch 1, wobei die erste Mischung die Silizium-Nanoteilchen, das erste leitfähige Material und die erste Verbindung auf Cellulosebasis in einem Gewichtsverhältnis von (1 bis 100):(0,01 bis 2,0):(0,01 bis 2,0) umfasst.

4. Verfahren nach Anspruch 1, wobei die zweite Mischung ferner ein zweites leitfähiges Material umfasst.

5. Verfahren nach Anspruch 4, wobei die zweite Mischung das Aktivmaterial auf Graphitbasis, die zweite Verbindung auf Cellulosebasis und das zweite leitfähige Material in einem Gewichtsverhältnis von (1 bis 100):(0,1 bis 5):(0,1 bis 5) umfasst.

6. Negative Elektrode für eine Lithiumsekundärbatterie, die nach dem Verfahren gemäß Anspruch 1 erhältlich ist, wobei die negative Elektrode folgendes umfasst:
einen Negativelektrodenstromabnehmer; und
eine Negativelektrodenaktivmaterialschicht, die auf dem Negativelektrodenstromabnehmer angeordnet ist,
wobei die Negativelektrodenaktivmaterialschicht folgendes umfasst:
ein Aktivmaterial auf Graphitbasis mit einem mittleren Teilchendurchmesser (D₅₀) von 5 µm bis 50 µm;
Silizium-Nanoteilchen mit einem mittleren Teilchendurchmesser (D₅₀) von 70 nm bis 300 nm;
ein erstes leitfähiges Material; und
zwei oder mehr Verbindungen auf Cellulosebasis, wobei jede Verbindung auf Cellulosebasis ein unterschiedliches gewichtsmittleres Molekulargewicht aufweist und wobei die zwei oder mehr Verbindungen auf Cellulosebasis eine erste Verbindung auf Cellulosebasis mit einem gewichtsmittleren Molekulargewicht von 10.000 Da bis 500.000 Da und eine zweite Verbindung auf Cellulosebasis mit einem gewichtsmittleren Molekulargewicht von 1.000.000 Da bis 2.500.000 Da umfassen, wobei der mittlere Teilchendurchmesser (D₅₀) gemessen wird unter Verwendung eines Laserbeugungsvefahrens oder einer Rasterelektrodenmikroskopaufnahme und definiert ist als ein Teilchendurchmesser bei 50% der kumulativen Teilchendurchmesserverteilung auf Volumenbasis, und das gewichtsmittlere Molekulargewicht ein Polystyrol-reduziertes gewichtsmittleres Molekulargewicht gemessen durch Gelpermeationschromatographie bedeutet.

7. Negative Elektrode nach Anspruch 6, wobei die Negativelektrodenaktivmaterialschicht 1 bis 100 Gewichtsteile der Silizium-Nanoteilchen in Bezug auf 100 Gewichtsteile des Aktivmaterials auf Graphitbasis umfasst.

8. Negative Elektrode nach Anspruch 6, wobei das erste leitfähige Material mindestens eine Verbindung, ausgewählt aus der Gruppe bestehend aus Kohlenstoff-Nanoteilchen, Kohlenstoff-Nanofasern, Kohlenstoff-Nanoröhrchen und Kohlenstoff-Nanostäbchen, umfasst.

9. Negative Elektrode nach Anspruch 6, wobei das erste leitfähige Material in Form von Teilchen vorliegt und einen mittleren Teilchendurchmesser (D₅₀) von 5 nm bis 40 nm aufweist.

10. Negative Elektrode nach Anspruch 6, wobei das erste leitfähige Material in Form einer Faser vorliegt und eine Breite von 5 nm bis 40 nm aufweist.

11. Negative Elektrode nach Anspruch 6, wobei die Negativelektrodenaktivmaterialschicht ferner ein zweites leitfähiges Material umfasst.

12. Negative Elektrode nach Anspruch 11, wobei das zweite leitfähige Material mindestens eine Verbindung, ausgewählt aus der Gruppe bestehend aus einem Material auf Kohlenstoffbasis, einem leitfähigen Whisker, einem leitfähigen Metalloxid und einem leitfähigen Polymer, umfasst.

13. Negative Elektrode nach Anspruch 6, wobei die Negativelektrodenaktivmaterialschicht ferner ein Bindemittel umfasst.

14. Lithiumsekundärbatterie, umfassend die negative Elektrode nach Anspruch 6.

## Revendications

1. Procédé de formation d'une électrode négative pour une batterie secondaire au lithium, le procédé comprenant les étapes consistant à :
former un premier mélange en mélangeant des nanoparticules de silicium présentant un diamètre moyen de particules (D₅₀) de 70 nm à 300 nm, un premier matériau conducteur, un premier composé à base de cellulose présentant une masse moléculaire moyenne en poids de 10 000 Da à 500 000 Da, et un solvant ;
former un second mélange en mélangeant un matériau actif à base de graphite présentant un diamètre moyen de particules (D₅₀) de 5 µm à 50 µm, un second composé à base de cellulose présentant une masse moléculaire moyenne en poids de 1 000 000 Da à 2 500 000 Da, et un solvant ;
former une suspension de matériau actif d'électrode négative en mélangeant le premier mélange et le second mélange ; et
former une couche de matériau actif d'électrode négative en appliquant la suspension de matériau actif d'électrode négative sur un collecteur de courant d'électrode négative, le diamètre moyen des particules (D₅₀) étant mesuré au moyen d'un procédé à diffraction laser ou d'une image par microscope électronique à balayage et étant défini comme un diamètre de particules à 50 % de distribution cumulative de diamètres de particules sur la base d'un volume, la masse moléculaire moyenne en poids signifiant une masse moléculaire moyenne en poids réduite au polystyrène mesurée par chromatographie à perméation sur gel.

2. Procédé selon la revendication 1, comprenant en outre l'ajout d'un liant dans la suspension de matériau actif d'électrode négative.

3. Procédé selon la revendication 1, dans lequel le premier mélange comprend les nanoparticules de silicium, le premier matériau conducteur et le premier composé à base de cellulose selon un rapport pondéral de (1 à 100):(0,01 à 2,0):(0,01 à 2,0).

4. Procédé selon la revendication 1, dans lequel le second mélange comprend en outre un second matériau conducteur.

5. Procédé selon la revendication 4, dans lequel le second mélange comprend le matériau actif à base de graphite, le second composé à base de cellulose et le second matériau conducteur selon un rapport pondéral de (1 à 100):(0,1 à 5):(0,1 à 5).

6. Électrode négative pour une batterie secondaire au lithium pouvant être obtenue par le procédé selon la revendication 1, l'électrode négative comprenant :
un collecteur de courant d'électrode négative ; et
une couche de matériau actif d'électrode négative disposée sur le collecteur de courant d'électrode négative,
dans laquelle la couche de matériau actif d'électrode négative comprend :
un matériau actif à base de graphite présentant un diamètre moyen de particules (D₅₀) de 5 µm à 50 µm ;
des nanoparticules de silicium présentant un diamètre moyen de particules (D₅₀) de 70 nm à 300 nm ;
un premier matériau conducteur ; et
deux composés à base de cellulose ou plus, dans lequel chaque composé à base de cellulose présente une masse moléculaire moyenne en poids différente et dans lequel les deux composés à base de cellulose ou plus comprennent un premier composé à base de cellulose présentant une masse moléculaire moyenne en poids de 10 000 Da à 500 000 Da et un deuxième composé à base de cellulose présentant une masse moléculaire moyenne en poids de 1 000 000 Da à 2 500 000 Da, le diamètre moyen des particules (D₅₀) étant mesuré en utilisant un procédé à diffraction laser ou une image par microscope électronique à balayage et étant défini comme un diamètre de particules à 50 % de distribution cumulative de diamètres de particules sur la base d'un volume, la masse moléculaire moyenne en poids signifiant une masse moléculaire moyenne en poids réduite au polystyrène mesurée par chromatographie à perméation sur gel.

7. Électrode négative selon la revendication 6, dans laquelle la couche de matériau actif d'électrode négative comprend 1 à 100 parts en poids des nanoparticules de silicium pour 100 parts en poids du matériau actif à base de graphite.

8. Électrode négative selon la revendication 6, dans laquelle le premier matériau conducteur comprend au moins un composé choisi dans le groupe consistant en des nanoparticules de carbone, des nanofibres de carbone, des nanotubes de carbone et des nanotiges de carbone.

9. Électrode négative selon la revendication 6, dans laquelle le premier matériau conducteur se présente sous la forme de particules et présente un diamètre moyen de particules (D₅₀) de 5 nm à 40 nm.

10. Électrode négative selon la revendication 6, dans laquelle le premier matériau conducteur se présente sous la forme d'une fibre et présente une largeur de 5 nm à 40 nm.

11. Électrode négative selon la revendication 6, dans laquelle la couche de matériau actif d'électrode négative comprend en outre un second matériau conducteur.

12. Électrode négative selon la revendication 11, dans laquelle le second matériau conducteur comprend au moins un composé choisi dans le groupe consistant en un matériau à base de carbone, un filament monocristallin conducteur, un oxyde métallique conducteur et un polymère conducteur.

13. Électrode négative selon la revendication 6, dans laquelle la couche de matériau actif d'électrode négative comprend en outre un liant.

14. Batterie secondaire au lithium comprenant l'électrode négative selon la revendication 6.
